# EUROPÄISCHE PATENTANMELDUNG

(11) **EP 1 547 945 A2**
(43) Veröffentlichungstag der Anmeldung: **29.06.2005**
(21) Anmeldenummer: 04029978.6
(22) Anmeldetag: 17.12.2004
(51) Int. Cl.: B65G 43/02

(54) **Förderanlage mit schienengebundenen Förderfahrzeugen**

(30) Priorität: 22.12.2003 AT 20642003
(71) Anmelder: LTW Lagertechnik GmbH, 6961 Wolfurt (AT)
(72) Erfinder: Peter, Bernhard, 6858 Schwarzach (AT)
(74) Vertreter: Hofinger, Engelbert, Dr.Dr.

(57) **Zusammenfassung**

Förderanlage mit einer Schienenanordnung, wenigstens zwei schienengebundenen Förderfahrzeugen und einer Steuervorrichtung zur Steuerung der Förderfahrzeuge, wobei die Förderfahrzeuge (58) wenigstens an einzelnen vorbestimmten Stellen der Schienenanordnung (59) ihre Position an die Steuervorrichtung (57) melden und dass die Steuervorrichtung (57) in Abhängigkeit von der jeweiligen Positionsmeldung eines Förderfahrzeuges (58) einen vorbestimmten Bereich der Schienenanordnung (59) für die Befahrung durch die anderen Förderfahrzeuge (58) sperrt.

## Beschreibung

Die vorliegende Erfindung betrifft eine Förderanlage mit einer Schienenanordnung, wenigstens zwei schienengebundenen Förderfahrzeugen und einer Steuervorrichtung zur Steuerung der Förderfahrzeuge.

Bereits bei der Bewegung von zwei und im verstärkten Maße bei der Bewegung mehrerer schienengebundener Förderfahrzeuge auf der selben Schienenanordnung sind Vorkehrungen zu treffen, um Kollisionen zwischen den einzelnen Förderfahrzeugen zu verhindern.

Da die Förderfahrzeuge ihre Transportbefehle von einem übergeordneten Rechner erhalten, ist beim Stand der Technik als erste Maßnahme vorgesehen, dass die Transportaufträge in einer Art vergeben werden, welche sicherstellt, dass die Förderfahrzeuge nicht zeitgleich die selben Bereiche befahren. Diese Art der Kollisionsvermeidung erreicht allerdings sicherheitstechnisch kein relevantes Niveau, da der übergeordnete Rechner keine unmittelbare sensorgestützte Information über die Position der Förderfahrzeuge hat.

Um einen sicherheitsrelevanten Kollisionsschutz zu erhalten, sind beim Stand der Technik häufig in Kurven- bzw. Weichenbereichen Sensoren installiert, welche herannahende Förderfahrzeuge detektieren. Durch lokal oder übergeordnet angeordnet angebrachte Steuervorrichtungen wird die Kollision von Förderfahrzeugen in diesen kritischen Bereichen verhindert. Dies geschieht durch Stoppen und Vorfahrt gewähren der Förderfahrzeuge, was mittels lokaler Stellelemente umgesetzt wird. Nachteilig ist daran, dass im gesamten Bereich der Förderanlage Sensoren und Stellelemente montiert und installiert werden müssen. Dies bedeutet einen hohen Aufwand an Material und Montagezeit. Eine weitere Komplikation entsteht, wenn Sensoren und Stellelemente ausfallen. Dies kann zum Stillstand der gesamten Förderanlage führen, wenn nicht aufwändige Ausfallstrategien entwickelt wurden.

Ein weiterer Ansatz zur Kollisionsvermeidung besteht darin, Sensoren mitfahrend auf den Förderfahrzeugen zu installieren. Diese detektieren andere Förderfahrzeuge auf der selben Fahrachse und stoppen durch mitfahrende Steuervorrichtungen ihre Fahrbewegung selbst. Dieser Mechanismus ist auf allen Fahrzeugen vorzusehen. Das Wiederaufnehmen der Fahrt geschieht meist durch manuelles Auseinanderfahren der Förderfahrzeuge oder durch mitfahrend oder festlandseitig (stationär) angeordnete Steuervorrichtungen. Der Kollisionsschutz ist für alle beteiligten Förderfahrzeuge in alle Fahrrichtungen einzurichten. Jedes Förderfahrzeug setzt für sich selbst die entsprechenden Steuerungsmaßnahmen um eine Kollision zu vermeiden. Bei der Erkennung eines anderen Förderfahrzeuges auf Kollisionskurs müssen also die Kollisionsschutzeinrichtungen beider Förderfahrzeuge ansprechen, um die Kollision zu verhindern. Erschwerend kommt noch hinzu, dass die eingesetzte Technologie eine lückenlose Abtastung des Fahrbereiches im Kurvenbereich nur schwer ermöglicht. Für die Einrichtung eines derartigen Kollisionsschutzes werden meist optoelektronische Sensoren auf Lichtschrankenbasis benutzt. Lichtschranken sind dabei auf dem Förderfahrzeug derart montiert, dass ein sich auf gleicher horizontaler Ebene auf einem anderen Förderfahrzeug befindender Reflektor erkannt wird. Da der Einfallwinkel des Lichtstrahls auf den Reflektor im Kurvenbereich stark variiert, müssen auf den Förderfahrzeugen eine Vielzahl von Lichtschranken und Reflektoren montiert werden, damit die Kollisionsschutzeinrichtung bei allen möglichen Winkeln funktioniert, in denen die Förderfahrzeuge zueinander stehen können. Zudem wird eine Verringerung der Tastlänge der Lichtschranke durch Alterung nicht automatisch erkannt. Auch das Abfallen oder Verschmutzen der Reflektoren wird nicht automatisch erkannt.

Aufgabe der Erfindung ist es einen Kollisionsschutz zu schaffen, der diese Probleme nicht aufweist.

Dies wird erfindungsgemäß dadurch erreicht, dass die Förderfahrzeuge und dass die Steuervorrichtung sperrt. Die Förderfahrzeuge sind also derart ausgebildet, dass sie wenigstens an einzelnen vorbestimmten Stellen der Schienenanordnung ihre Position an die Steuervorrichtung melden können. Die Steuervorrichtung ist derart ausgebildet, dass sie in Abhängigkeit von der jeweiligen Positionsmeldung eines Förderfahrzeuges einen vorbestimmten Bereich der Schienenanordnung für die Befahrung durch die anderen Förderfahrzeuge sperren kann. Die Förderfahrzeuge können beispielsweise als Flurförderfahrzeuge ausgebildet sein.

Der erfindungsgemäße Kollisionsschutz minimiert den Montage- und Installationsaufwand, da die beim Stand der Technik üblichen Sensoren im Kurvenund Weichenbereich der Schienenanordnung entfallen können. Ebenso ist es nicht mehr nötig eine Vielzahl von unter unterschiedlichen Winkeln aufgestellten optoelektronischen Sensoren auf den einzelnen Förderfahrzeugen zu installieren. Weiters kann beim Ausfall des Kollisionsschutzes auf einem einzelnen Förderfahrzeug dieses einfach beim Lagersteuerrechner und der Steuervorrichtung abgemeldet und in einen separaten Bereich der Schienenanordnung verbracht werden. Die restlichen Förderfahrzeuge können weiterhin genutzt werden.

Bei einer vorteilhaften Ausführungsform der Erfindung ist vorgesehen, dass die Förderfahrzeuge an vorbestimmten Stellen der Schienenanordnung zur Weiterfahrt eine Freigabe der Steuervorrichtung benötigen. Bei den vorbestimmten Stellen kann es sich beispielsweise um Stellen, welche Weichen- oder Kurvenbereichen vorgelagert sind, handeln. Das aktive Anfragen des Förderfahrzeuges vor der Weiterfahrt erhöht das sicherheitstechnische Niveau der erfindungsgemäßen Förderanlage noch weiter.

Vorteilhaft kann auch vorgesehen sein, dass die Schienenanordnung wenigstens abschnittsweise in der Steuervorrichtung elektronisch repräsentiert ist. Die Steuervorrichtung kann somit zumindest die Streckenabschnitte der Schienenanordnung verwalten, welche nicht zeitgleich von zwei Förderfahrzeugen befahren werden dürfen. Vorteilhafter Weise kann vorgesehen sein, dass unterschiedliche Abschnitte der Schienenanordnung in der Steuervorrichtung eindeutig zuordenbar elektronisch repräsentiert sind. Dies gestattet eine unterscheidbare Darstellung der unterschiedlichen Abschnitte der Schienenanordnung durch die Steuervorrichtung.

Bei einer besonders bevorzugten Ausführungsform der Erfindung ist vorgesehen, dass die Förderfahrzeuge vor Einfahrt in einen vorbestimmten Schienenabschnitt, vorzugsweise vor Einfahrt in einen Weichenabschnitt und/oder Kurvenabschnitt, eine Freigabe der Steuervorrichtung benötigen. Die Steuervorrichtung kann somit einzelne Abschnitte der Schienenanordnung (Blöcke) zum Befahren durch Förderfahrzeuge freigeben oder sperren. Damit ist sichergestellt, dass diese Blöcke nie von zwei Förderfahrzeugen zeitgleich befahren werden können. Besonders vorteilhaft ist es, wenn die Steuervorrichtung nach Erteilung der Freigabe an ein Förderfahrzeug zur Einfahrt in den vorbestimmten Schienenabschnitt diesen Schienenabschnitt für alle anderen Förderfahrzeuge sperrt. Durch diese Maßnahme wird das Befahren des jeweiligen Schienenabschnittes selektiv einem einzelnen Förderfahrzeug gestattet. Während der Reaktionszeit der Steuereinrichtung oder bei deren Ausfall kann es zu keiner Kollision kommen, da Blöcke nur bei intakter Kommunikation freigegeben werden können. Vorteilhafter Weise kann vorgesehen sein, dass die Steuervorrichtung nachdem das freigegebene Förderfahrzeug den vorbestimmten Schienenabschnitt verlassen hat, die Sperre dieses Schienenabschnitts für die anderen Förderfahrzeuge aufhebt. Damit wird sichergestellt, dass die Sperre eines bestimmten Schienenabschnittes für die anderen Förderfahrzeuge zum frühest möglichen Zeitpunkt aufgehoben wird.

Bei einer vorteilhaften Ausführungsform der Erfindung kann vorgesehen sein, dass die Förderfahrzeuge und die Steuervorrichtung drahtlos, vorzugsweise über ein Funknetzwerk (wireless LAN) miteinander kommunizieren. Mittels Datenaustausch zwischen den Förderfahrzeugen und der Steuervorrichtung kann eine An- und Abmeldeprozedur realisiert werden, mit der die Steuervorrichtung einzelne Blöcke für einzelne Förderfahrzeuge zum Befahren freigibt bzw. sperrt. Weiters können die Steuerungen der einzelnen Förderfahrzeuge ihre Position über das eingerichtete Funknetzwerk laufend an die Steuervorrichtung übermitteln. Da die Förderfahrzeuge beim Stand der Technik ihre Transportaufträge von einem Lagersteuerrechner übermittelt bekommen, kann ein für diese Zwecke bereits eingerichtete Funknetzwerk zwischen Lagersteuerrechner und Förderfahrzeugen auch für die Kommunikation zwischen der Steuervorrichtung und den einzelnen Förderfahrzeugen verwendet werden.

Weisen die Förderfahrzeuge wenigstens ein Wegmesssystem auf (Ausführungsform nach Anspruch 13), so stellt dies eine besonders vorteilhafte Möglichkeit dafür dar, der Steuervorrichtung jederzeit Auskunft über die Position der einzelnen Fahrzeuge geben zu können. Es kann dabei vorgesehen sein, die Wegmesssysteme an strategischen Punkten auf Abweichungen zu kontrollieren und zu synchronisieren. Anders als beim Stand der Technik ist es daher nicht mehr erforderlich, Positionsmarkierungen an strategischen Positionen der Schienenanordnung anzubringen. Damit ist auch das Problem des Standes der Technik behoben, dass die Steuervorrichtung zwischen den Positionsmarkierungen keine Information über die Position der Fahrzeuge hat. Weiters wird bei einer Änderung der Bereichseinteilung ein Umkleben und Neuanbringen von Positionsmarkierungen vermieden. Es kann lediglich ein Neueinmessen neuer Positionen notwendig sein.

Die Position der einzelnen Förderfahrzeuge kann über das Wegmesssystem, welches beim Stand der Technik für die Abarbeitung der Transportaufträge benötigt wird, erfolgen. Hierbei handelt es sich meist um ein absolutes Wegmesssystem in Form eines am Boden montierten Identifikationsstreifens, der Positionen in der Schienenanordnung eindeutig festlegt. Vorteilhafterweise kann auf den Förderfahrzeugen ein weiteres Wegmesssystem, welches unabhängig von diesem Wegmesssystem arbeitet, vorgesehen sein. Beispielsweise kann es sich hierbei um ein inkrementales Wegmesssystem handeln. Durch die Redundanz wird ein höheres Sicherheitsniveau erreicht. Dafür ist, wie bereits ausgeführt, nur die Installation eines zusätzlichen Wegmesssystems notwendig, da alle anderen technischen Einrichtungen bereits für die Abwicklung der Transportaufträge grundsätzlich benötigt werden.

Vorteilhafterweise kann vorgesehen sein, dass die Steuervorrichtung, vorzugsweise in vorgegebenen Zeitabständen, die Kommunikationsfähigkeit der einzelnen Förderfahrzeuge überprüft. Hierdurch können defekte Kommunikationseinrichtungen auf einzelnen Förderfahrzeugen erkannt und diese Förderfahrzeuge aussortiert werden.

Aus Kostengründen kann es vorteilhaft sein, wenn alle Förderfahrzeuge mit derselben Steuervorrichtung kommunizieren. Durch diese Maßnahme wird der Kommunikationsaufwand auf ein Minimum reduziert, da nicht mehr jedes Förderfahrzeug alle anderen Förderfahrzeuge um Erlaubnis bitten muss. Die Steuervorrichtung kann dabei beispielsweise stationär ausgeführt sein.

Bei einer vorteilhaften Ausführungsform der Erfindung ist vorgesehen, dass die Steuervorrichtung eine SPS (speicherprogrammierbare Steuerung) aufweist. Derartige SPS stehen in einem breiten Angebot kommerziell zur Verfügung.

Ein weiterer Aspekt der Erfindung betrifft ein Lager, insbesondere Hochregallager, mit einer Förderanlage nach einem der Ansprüche 1 bis 14.

Ein weiterer Aspekt der Erfindung betrifft weiters ein Verfahren zum Betreiben einer Förderanlage, insbesondere nach einem der Ansprüche 1 bis 14, mit einer Schienenanordnung, wenigstens zwei schienengebundenen Förderfahrzeugen und einer Steuervorrichtung zur Steuerung der Förderfahrzeuge, dadurch gekennzeichnet, dass die Förderfahrzeuge wenigstens an einzelnen vorbestimmten Stellen der Schienenanordnung ihre Position an die Steuervorrichtung melden und dass die Steuervorrichtung in Abhängigkeit von der jeweiligen Positionsmeldung eines Förderfahrzeuges einen vorbestimmten Bereich der Schienenanordnung für die Befahrung durch die anderen Förderfahrzeuge sperrt.

Weitere Vorteile und Einzelheiten der Erfindung gehen aus der nachfolgenden Figurenbeschreibung hervor. Dabei zeigt:
- Fig. 1: die schematische Darstellung eines Kommunikationssystems für eine Förderanlage,
- Fig. 2: beispielhaft eine Schienenanordnung einer Förderanlage,
- Fig. 3: einen Ausschnitt aus der in Fig. 2 gezeigten Schienenanordnung,
- Fig. 4: eine weitere Darstellung des in Fig. 3 gezeigten Ausschnitts und
- Fig. 5: schematisch den Betrieb einer erfindungsgemäßen Förderanlage.

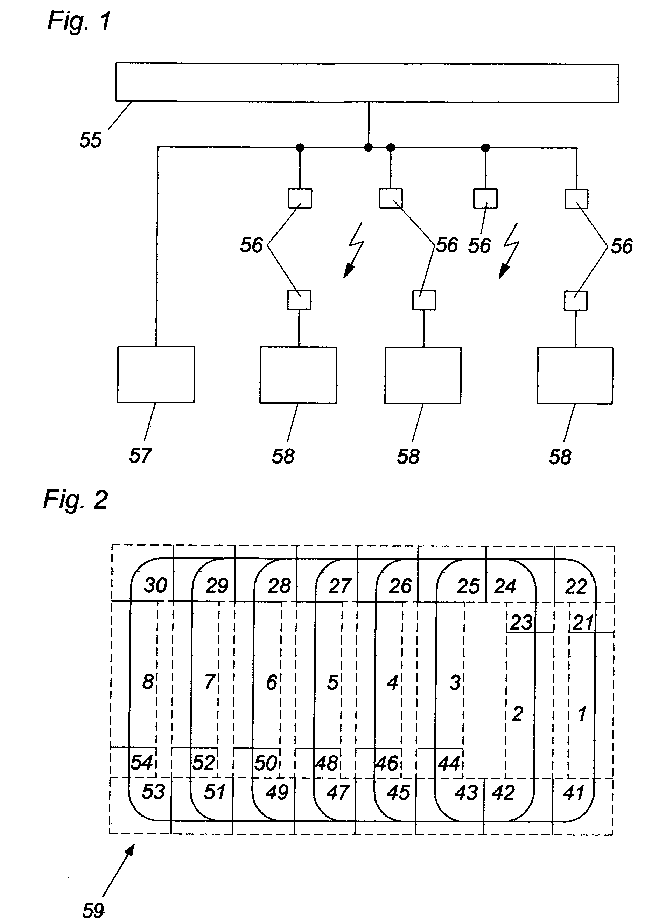

Fig. 1 zeigt schematisch ein Beispiel für ein Kommunikationssystem eines Lagers mit einer erfindungsgemäßen Förderanlage. Die Förderfahrzeuge 58 kommunizieren dabei mit einem Lagersteuerrechner 55 und einer Steuervorrichtung 57 mit Hilfe von Schnittstellen 56 über ein Funknetzwerk. Als Übertragungssystem kann beispielsweise Industrial Ethernet vorgesehen sein. Der Lagersteuerrechner 55 versorgt die einzelnen Förderfahrzeuge 58 mit Transportaufträgen und wird ständig von jedem einzelnen Förderfahrzeug 58 mit aktuellen Informationen, beispielsweise über Ist-Position des Förderfahrzeuges 58, den Betriebszustand oder den Auftragszustand versorgt. Der Kollisionsschutz wird über die stationäre Steuervorrichtung 57 abgewickelt.

Fig. 2 zeigt schematisch eine Schienenanordnung 59, welche in der Steuervorrichtung 57 in einzelne logische Bereiche 1 - 54 unterteilt vorliegt. Die Steuervorrichtung 57 verwaltet in diesem Ausführungsbeispiel nur die kritischen Blöcke 9 - 54. Jedes Förderfahrzeug 58 kann also ohne Freigabe in die Blöcke 1 - 8 einfahren. Ein Mindestmaß an Kollisionssicherung kann in diesen Blöcken durch auf den Förderfahrzeugen 58 angeordneten, herkömmlichen Lichtschranken erfolgen.

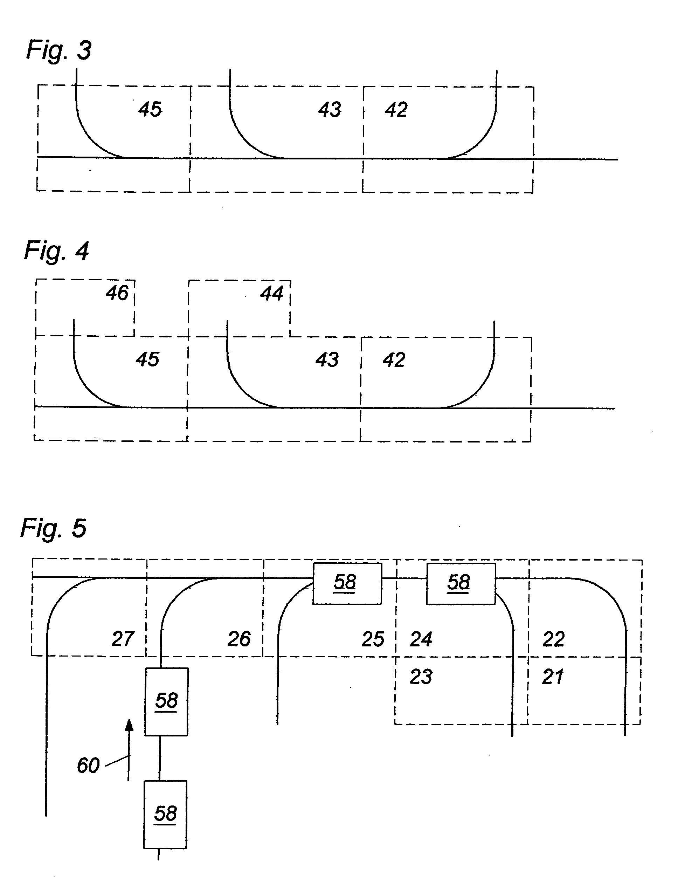

Fig. 3 zeigt einen Ausschnitt der in Fig. 2 dargestellten Schienenanordnung 59 mit den Blöcken 42, 43 und 45. In diesem kritischen Bereich dürfen die einzelnen Förderfahrzeuge 58 nur nach Freigabe durch die Steuervorrichtung 57 einfahren. Vorteilhafterweise wird die Ist-Position eines Förderfahrzeuges 58 durch zwei Werte definiert, da sich das Förderfahrzeug 58 in zwei Blöcken gleichzeitig befinden kann. Jedes Förderfahrzeug 58 darf sich in den kritischen Blöcken 42, 43, und 45 nur dann bewegen, wenn diese Blöcke 42, 43, und 45 von der Steuervorrichtung 57 freigegeben wurden. Auch eine Bewegung im aktuellen Block 42, 43, und 45 darf nur bei Freigabe durchgeführt werden. Beispielsweise startet ein Förderfahrzeug 58 eine Anfrage zur Freigabe von Block 43. Die Steuervorrichtung 57 prüft sodann, ob bereits einem anderen Förderfahrzeug 58 die Freigabe für Block 43 erteilt wurde. Existiert eine derartige Freigabe nicht, wird Block 43 für das anfragende Förderfahrzeug 58 freigegeben und darf von diesem befahren werden. Durch die Freigabe des Block 43 für das anfragende Förderfahrzeug 58 wird dieser Block natürlich für alle anderen Förderfahrzeuge 58 gesperrt. Verlässt das Förderfahrzeug 58 den Block 43, meldet es dies der Steuervorrichtung 57, welche in Reaktion darauf die Reservierung des Blocks 43 für das Förderfahrzeug 58 löscht. Somit steht Block 43 wieder für eine erneute Anfrage von Förderfahrzeugen 58 auf Freigabe bereit.

Fig. 4 zeigt ein weiteres Ausführungsbeispiel, bei dem zusätzliche Blöcke 46 und 44 definiert wurden. Dies deshalb da mitfahrende optoelektronische Sensoren nur bei gerader Stellung des Förderfahrzeuges 58 funktionieren. Somit kann das Einfahren eines Förderfahrzeuges 58 in den Kurvenbereich 45 oder 43 durch die Steuervorrichtung 57 gesteuert werden. Danach kann der Kollisionsschutz wieder von den optoelektronischen Sensoren des Förderfahrzeuges 58 übernommen werden.

Anhand der Fig. 5 sei beispielhaft die Einfahrt eines Förderfahrzeuges 58 in einen Kurvenbereich 26 und die Weiterfahrt in den Zielbereich 24 geschildert. Das Förderfahrzeug 58 hat dabei vom Lagersteuerrechner 55 über das Funknetzwerk einen Transportauftrag in den Bereich 24 erhalten. Für die Fahrt bis zum Zielbereich 24 muss dass Förderfahrzeug 58 immer zwei Blöcke gleichzeitig anfragen und darf auch erst bei Freigabe beider Blöcke in den ersten der beiden Blöcke einfahren. Das Förderfahrzeug 58 steht anfangs in einer Quellposition und erhält vom Lagersteuerrechner 55 einen Fahrbefehl zur Zielposition in Block 24. Das Förderfahrzeug 58 setzt sich in Richtung 60 in Bewegung und stellt eine Anfrage auf Freigabe für die Blöcke 26 und 25 an die Steuervorrichtung 57. Bis zur Freigabe fährt das Förderfahrzeug 58 bis knapp vor den Bereich 26. Wurde bis zum Erreichen dieses Etappenzieles noch keine Freigabe für die Blöcke 26 und 25 erteilt, bleibt das Förderfahrzeug 58 vor dem Block 26 stehen. Ansonsten wird bis zum nächsten Etappenziel (Block 25) weitergefahren und gleichzeitig die Anfrage auf Freigabe für den Block 24 aktiviert. Wurde der Block 26 vom Förderfahrzeug 58 vollständig durchfahren, wird dieser Block 26 durch die Steuervorrichtung 57 wieder für andere Förderfahrzeuge 58 freigegeben. Wurde bei Annäherung an den Bereich 25 noch keine Freigabe für den Block 24 erreicht, bleibt das Förderfahrzeug 58 vor dem Block 24 stehen. Ansonsten wird die endgültige Zielposition in Block 24 angefahren. Bei vollständigen Verlassen das Blocks 25 wird dieser durch die Steuervorrichtung 57 für andere Förderfahrzeuge 58 freigegeben. Beim Erreichen der Zielposition in Block 24 wird das Förderfahrzeug 58 bis zum Erhalt eines neuen Auftrages durch den Lagersteuerrechner 55 gestoppt. Der Block 24 bleibt dabei ständig für das Förderfahrzeug 58 reserviert.

## Patentansprüche

1. Förderanlage mit einer Schienenanordnung, wenigstens zwei schienengebundenen Förderfahrzeugen und einer Steuervorrichtung zur Steuerung der Förderfahrzeuge, **dadurch gekennzeichnet, dass** die Förderfahrzeuge (58) wenigstens an einzelnen vorbestimmten Stellen der Schienenanordnung (59) ihre Position an die Steuervorrichtung (57) melden und dass die Steuervorrichtung (57) in Abhängigkeit von der jeweiligen Positionsmeldung eines Förderfahrzeuges (58) einen vorbestimmten Bereich der Schienenanordnung (59) für die Befahrung durch die anderen Förderfahrzeuge (58) sperrt.

2. Förderanlage nach Anspruch 1, **dadurch gekennzeichnet, dass** die Förderfahrzeuge (58) an vorbestimmten Stellen der Schienenanordnung (59) zur Weiterfahrt eine Freigabe der Steuervorrichtung (57) benötigen.

3. Förderanlage nach Anspruch 1 oder 2, **dadurch gekennzeichnet, dass** die Schienenanordnung (59) wenigstens abschnittsweise in der Steuervorrichtung (57) elektronisch repräsentiert ist.

4. Förderanlage nach Anspruch 3, **dadurch gekennzeichnet, dass** unterschiedliche Abschnitte (1 - 54) der Schienenanordnung (59) in der Steuervorrichtung (57) eindeutig zuordenbar elektronisch repräsentiert sind.

5. Förderanlage nach einem der Ansprüche 1 bis 4, **dadurch gekennzeichnet, dass** die Förderfahrzeuge (58) vor Einfahrt in einen vorbestimmten Schienenabschnitt (1 - 54), vorzugsweise vor Einfahrt in einen Weichenabschnitt und/oder Kurvenabschnitt (9 - 54), eine Freigabe der Steuervorrichtung (57) benötigen.

6. Förderanlage nach Anspruch 5, **dadurch gekennzeichnet, dass** die Steuervorrichtung (57) nach Erteilung der Freigabe an ein Förderfahrzeug (58) zur Einfahrt in den vorbestimmten Schienenabschnitt (1 - 54) diesen Schienenabschnitt (1 -54) für alle anderen Förderfahrzeuge (58) sperrt.

7. Förderanlage nach Anspruch 6, **dadurch gekennzeichnet, dass** die Steuervorrichtung (57) nachdem das freigegebene Förderfahrzeug (58) den vorbestimmten Schienenabschnitt (1 - 54) verlassen hat, die Sperre dieses Schienenabschnitts (1 - 54) für die anderen Förderfahrzeuge (58) aufhebt.

8. Förderanlage nach einem der Ansprüche 1 bis 7, **dadurch gekennzeichnet, dass** die Förderfahrzeuge (58) und die Steuervorrichtung (57) drahtlos, vorzugsweise über ein Funknetzwerk (wireless LAN) miteinander kommunizieren.

9. Förderanlage nach einem der Ansprüche 1 bis 8, **dadurch gekennzeichnet, dass** die Steuervorrichtung (57), vorzugsweise in vorgegebenen Zeitabständen, die Kommunikationsfähigkeit der einzelnen Förderfahrzeuge (58) überprüft.

10. Förderanlage nach einem der Ansprüche 1 bis 9, **dadurch gekennzeichnet, dass** alle Förderfahrzeuge (58) mit derselben Steuervorrichtung (57) kommunizieren.

11. Förderanlage nach einem der Ansprüche 1 bis 10, **dadurch gekennzeichnet, dass** die Steuervorrichtung (57) stationär ist.

12. Förderanlage nach einem der Ansprüche 1 bis 11, **dadurch gekennzeichnet, dass** die Steuervorrichtung (57) eine SPS (speicherprogrammierbare Steuerung) aufweist.

13. Förderanlage nach einem der Ansprüche 1 bis 12, **dadurch gekennzeichnet, dass** die Förderfahrzeuge (58) wenigstens ein Wegmesssystem, vorzugsweise zwei unabhängig voneinander arbeitende Wegmesssysteme, aufweisen.

14. Förderanlage nach Anspruch 13, **dadurch gekennzeichnet, dass** die Förderfahrzeuge (58) ein absolutes und/oder ein inkrementales Wegmesssystem aufweisen.

15. Lager, insbesondere Hochregallager, mit einer Förderanlage nach einem der Ansprüche 1 bis 14.

16. Verfahren zum Betreiben einer Förderanlage, insbesondere nach einem der Ansprüche 1 bis 14, mit einer Schienenanordnung, wenigstens zwei schienengebundenen Förderfahrzeugen und einer Steuervorrichtung zur Steuerung der Förderfahrzeuge, **dadurch gekennzeichnet, dass** die Förderfahrzeuge (58) wenigstens an einzelnen vorbestimmten Stellen der Schienenanordnung (59) ihre Position an die Steuervorrichtung (57) melden und dass die Steuervorrichtung (57) in Abhängigkeit von der jeweiligen Positionsmeldung eines Förderfahrzeuges (58) einen vorbestimmten Bereich der Schienenanordnung (59) für die Befahrung durch die anderen Förderfahrzeuge (58) sperrt.
